# EUROPEAN PATENT SPECIFICATION

(11) **EP 3 691 308 B1**
(45) Date of publication and mention of the grant of the patent: **24.03.2021**
(21) Application number: 20154705.6
(22) Date of filing: 30.01.2020
(51) Int. Cl.: H04W 4/50, G06F 9/451, G06F 9/445, H04W 4/80, H04L 29/08

(54) **ELECTRONIC APPARATUS AND CONTROL METHOD FOR INITIAL SETUP OF SETUP LANGUAGE**
ELEKTRONISCHE VORRICHTUNG UND STEUERUNGSVERFAHREN ZUR EINRICHTUNG EINER INITALEN SPRACHKONFIGURATION
APPAREIL ÉLECTRONIQUE ET SON PROCÉDÉ DE COMMANDE A CONFIGURATION INITIALE DE LA LANGUE

(30) Priority: 01.02.2019 KR 20190013916
(43) Date of publication of application: 05.08.2020
(73) Proprietor: Samsung Electronics Co., Ltd., Gyeonggi-do 16677 (KR)
(72) Inventor: CHOI, Myungkwan, 16677 Gyeonggi-do (KR); KIM, Seokhyun, 16677 Gyeonggi-do (KR); SHIN, Junghoon, 16677 Gyeonggi-do (KR); JUN, Seran, 16677 Gyeonggi-do (KR); CHO, Bonghyun, 16677 Gyeonggi-do (KR)
(74) Representative: Walaski, Jan Filip

(56) References cited:
- US-A1- 2015 248 399
- US-B1- 9 998 334

## Description

The disclosure relates to an electronic apparatus and a control method thereof, more specifically to an electronic apparatus capable of performing an initial setup and a control method thereof.

In general, electronic apparatuses such as a TV, a computer, a notebook, and an artificial intelligence (AI) speaker require an initial setup. The initial setup may be a task to set a language, date, time, user account or the like to be applied to an electronic apparatus, and may be performed when the power of the electronic apparatus after a product launch is first turned on as well as when a user instruction for the initial setup is first received.

Conventional electronic apparatuses, on the other hand, may provide a list including a plurality of languages supported by the electronic apparatus for the initial setup of language. This feature, however, may cause inconvenience to the user as the user may be forced to input many manipulations to the electronic apparatus to select a specific language among the various languages.
US 2015/0248399 discloses a wireless device including a processor and a wireless interface.
US 9998334 discloses a method of determining a communication language for IoT devices.

According to an aspect of the invention, there is provided an electronic apparatus as set out in claim 1. According to another aspect of the invention, there is provided a control method of an electronic apparatus as set out in claim 10. According to embodiments, an electronic apparatus includes a communicator and a processor configured to, based on receiving a pre-set signal, through the communicator, from an external apparatus that is located in a periphery of the electronic apparatus while performing an initial setup of the electronic apparatus, identify an initial setup language for the initial setup of the electronic apparatus, based on information on an external apparatus language that is set in the external apparatus, the information on the external apparatus language being included in the received pre-set signal, and perform the initial setup of the electronic apparatus, based on the identified initial setup language.

The processor may be further configured to, while the initial setup is being performed, transmit, to the external apparatus, a request signal requesting transmission of the information on the external apparatus language set in the external apparatus, using a Bluetooth communication circuitry, and based on the request signal being transmitted, receive the pre-set signal from the external apparatus.

The processor may be further configured to, based on not receiving the pre-set signal while the initial setup is being performed, identify the initial setup language for the initial setup of the electronic apparatus, based on information on a pre-set country and a pre-set language that are pre-set in the electronic apparatus.

The processor may be further configured to, based on one language being pre-set in the electronic apparatus, identify the pre-set language as the initial setup language for the initial setup of the electronic apparatus.

The electronic apparatus may further include a display. The processor may be further configured to, while the initial setup is being performed, based on a plurality of languages being pre-set in the electronic apparatus, control the display to display the plurality of languages by controlling the display to display a main language that is mainly used in the pre-set country, among the plurality of languages, to be distinguishable from other languages among the plurality of languages, and identify a selected language that is selected from the displayed plurality of languages as the initial setup language for the initial setup of the electronic apparatus.

The processor may be further configured to, while the initial setup is being performed, transmit a request signal requesting transmission of information on an access point (AP) country, to an AP that is located in the periphery of the electronic apparatus, based on receiving an AP signal from the AP in response to the request signal being transmitted, identify the information on the AP country included in the received AP signal, and based on the AP country included in the AP signal being different from the pre-set country pre-set in the electronic apparatus, identify the initial setup language for the initial setup of the electronic apparatus, based on the identified information on the AP country included in the AP signal.

The processor may be further configured to identify a plurality of countries respectively corresponding to a plurality of APs, based on a plurality of AP signals that is received from the plurality of APs, based on the identified plurality of countries being different from one another, identify one among the identified plurality of countries, based on the information on the pre-set country pre-set in the electronic apparatus, and identify one language corresponding to the identified one among the plurality of countries as the initial setup language for the initial setup of the electronic apparatus.

The processor may be further configured to identify the one among the identified plurality of countries, based on a distance between the pre-set country pre-set in the electronic apparatus and each of the identified plurality of countries.

The processor may be further configured to identify a plurality of countries respectively corresponding to a plurality of APs, based on a plurality of AP signals that is received from the plurality of APs, and based on at least one among the identified plurality of countries being different, identify one language corresponding to one among the identified plurality of countries having a highest frequency among the identified plurality of countries, as the initial setup language for the initial setup of the electronic apparatus.

The processor may be further configured to identify a country corresponding to the identified initial setup language, and perform the initial setup on at least one among a time and a broadcasting channel of the electronic apparatus, based on information on the identified country.

According to embodiments, a control method of an electronic apparatus includes receiving a pre-set signal from an external apparatus that is located in a periphery of the electronic apparatus while performing an initial setup of the electronic apparatus based on a user instruction, identifying an initial setup language for the initial setup of the electronic apparatus, based on information on an external apparatus language that is set in the external apparatus, the information on the external apparatus language being included in the received pre-set signal, and performing the initial setup of the electronic apparatus, based on the identified initial setup language.

The control method may further include, while the initial setup is being performed, transmitting, to the external apparatus, a request signal requesting transmission of the information on the external apparatus language set in the external apparatus, using a Bluetooth communication circuitry. The receiving the pre-set signal may include, based on the request signal being transmitted, receive the pre-set signal from the external apparatus.

The identifying the initial setup language may include, based on not receiving the pre-set signal while the initial setup is being performed, identifying the initial setup language for the initial setup of the electronic apparatus, based on information on a pre-set country and a pre-set language that are pre-set in the electronic apparatus.

The identifying the initial setup language may include, based on one language being pre-set in the electronic apparatus, identifying the pre-set language as the initial setup language for the initial setup of the electronic apparatus.

The control method may further include, while the initial setup is being performed, based on a plurality of languages being pre-set in the electronic apparatus, displaying the plurality of languages by displaying a main language that is mainly used in the pre-set country, among the plurality of languages, to be distinguishable from other languages among the plurality of languages. The identifying the initial setup language may include identifying a selected language that is selected from the displayed plurality of languages as the initial setup language for the initial setup of the electronic apparatus.

The control method may further include, while the initial setup is being performed, transmitting a request signal requesting transmission of information on an access point (AP) country, to an AP that is located in the periphery of the electronic apparatus, and based on receiving an AP signal from the AP in response to the request signal being transmitted, identifying the information on the AP country included in the received AP signal. The identifying the initial setup language may include, based on the AP country included in the AP signal being different from the pre-set country pre-set in the electronic apparatus, identifying the initial setup language for the initial setup of the electronic apparatus, based on the identified information on the AP country included in the AP signal.

The control method may further include identifying a plurality of countries respectively corresponding to a plurality of APs, based on a plurality of AP signals that is received from the plurality of APs, and based on the identified plurality of countries being different from one another, identifying one among the identified plurality of countries, based on the information on the pre-set country pre-set in the electronic apparatus. The identifying the initial setup language may include identifying one language corresponding to the identified one among the plurality of countries as the initial setup language for the initial setup of the electronic apparatus.

The identifying the one among the identified plurality of countries may include identifying the one among the identified plurality of countries, based on a distance between the pre-set country pre-set in the electronic apparatus and each of the identified plurality of countries.

The control method may further include identifying a plurality of countries respectively corresponding to a plurality of APs, based on a plurality of AP signals that is received from the plurality of APs. The identifying the initial setup language may include, based on at least one among the identified plurality of countries being different, identifying one language corresponding to one among the identified plurality of countries having a highest frequency among the identified plurality of countries, as the initial setup language for the initial setup of the electronic apparatus.

The control method may further include identifying a country corresponding to the identified initial setup language, and performing the initial setup on at least one among a time and a broadcasting channel of the electronic apparatus, based on information on the identified country.

According to embodiments, a non-transitory computer-readable storage medium including instructions configured to cause a processor of an electronic apparatus to perform an initial setup of the electronic apparatus, while the initial setup is being performed, transmit, to an external apparatus in a communicable range of the electronic apparatus, a first request signal requesting transmission of information on an external apparatus language that is set in the external apparatus, based on the first request signal being transmitted, receive, from the external apparatus, the information on the external apparatus language, identify an initial setup language for the initial setup of the electronic apparatus, based on the received information on the external apparatus language, and perform the initial setup of the electronic apparatus, based on the identified initial setup language.

The instructions may be further configured to cause the processor to, while the initial setup is being performed, transmit a second request signal requesting transmission of information on an access point (AP) country, to an AP that is located in the communicable range of the electronic apparatus, based on the second request signal being transmitted, receive, from the AP, the information on the AP country, and based on the received information on the AP country being different from information on a pre-set country that is pre-set in the electronic apparatus, identify the initial setup language for the initial setup of the electronic apparatus, based on the received information on the AP country.

Additional aspects will be set forth in part in the description that follows and, in part, will be apparent from the description, or may be learned by practice of the presented embodiments.

### BRIEF DESCRIPTION OF THE DRAWINGS

The above and other aspects, features and advantages of embodiments of the disclosure will be more apparent from the following detailed description, taken in conjunction with the accompanying drawings, in which:
FIG. 1 is a block diagram describing an electronic apparatus according to embodiments;
FIG. 2 is a flow chart describing a method of identifying a language for an initial setup by an electronic apparatus, according to embodiments;
FIG. 3 is a diagram illustrating an electronic apparatus performing a language setting operation, according to embodiments;
FIG. 4 is a diagram illustrating an electronic apparatus having completed a language setting operation, according to embodiments;
FIG. 5 is a flow chart describing a method of identifying a language for initial setup by an electronic apparatus, based on information on a pre-set country and a pre-set language in the electronic apparatus, according to embodiments;
FIG. 6 is a diagram illustrating an electronic apparatus displaying a plurality of languages, according to embodiments;
FIG. 7 is a flow chart describing a method of identifying a language for initial setup, based on an access point (AP) signal, according to embodiments;
FIG. 8 is a flow chart describing a method of identifying a language for initial setup, based on receiving information on a plurality of countries from a plurality of APs, according to embodiments; and
FIG. 9 is a detailed block diagram describing an electronic apparatus according to embodiments.

### DETAILED DESCRIPTION

An object of the disclosure is in providing an electronic apparatus performing setting of a language in the initial setup of the electronic apparatus automatically without user manipulation or with minimum user manipulation and a control method thereof.

Terms used in the disclosure and the claimed scope have been selected from general terms in consideration of functions disclosed herein. These terms, however, may vary according to the intent, the legal or technical interpretations of those skilled in the art, appearance of new technologies, and the like. In addition, some terms may be terms that have been arbitrarily selected, and these terms may be interpreted as the meanings defined herein. Terms without specific definitions may be interpreted based on the overall descriptions of the disclosure and based on the technical knowledge of the technical field to which this pertains.

In addition, in describing the disclosure, based on identifying that specific descriptions of known functions or configurations in the related art may unnecessarily obscure the gist of the disclosure, the detailed description thereof may be simplified or omitted.

Further, the embodiments of the disclosure have been described in detail with reference to the attached drawings and descriptions of the attached drawings, but the disclosure is not restricted or limited by the embodiments described herein.

The disclosure will be described below in greater detail with reference to the attached drawings.

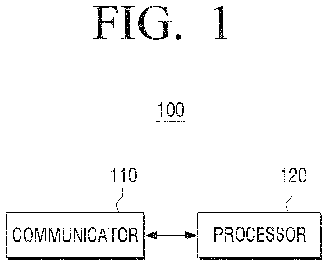

FIG. 1 is a block diagram describing an electronic apparatus according to embodiments.

The electronic apparatus 100 may be a smart TV. However, this is an example, and the electronic apparatus 100 may be various electronic apparatuses capable of performing initial setup such as a computer, a notebook, an artificial intelligence (AI) speaker, a tablet, a digital camera, a camcorder, a personal digital assistant (PDA), or a smartphone.

Referring to FIG. 1, the electronic apparatus 100 may include a communicator 110 and a processor 120.

The communicator 110 may transmit and receive various data by communicating with an external apparatus. For example, the communicator 110 may perform communication with the external apparatus through a local area network (LAN), an internet network, and a mobile communication network as well as through various communication methods such as Bluetooth (BT), Bluetooth low energy (BLE), wireless fidelity (Wi-Fi), Zigbee, and near field communication (NFC).

To this end, the communicator 110 may include various communication modules for performing network communication. For example, the communicator 110 may include a Bluetooth chip, a Wi-Fi chip, a wireless communication chip, and the like.

The communicator 110 may perform communication with the external apparatus to receive information on a language set in the external apparatus. The external apparatus may be implemented as a smartphone, a computer, a notebook, or the like, but are not limited thereto.

The communicator 110 may perform communication with the external apparatus to receive a signal including information on a country from the external apparatus. The external apparatus may be an access point (AP), but is not limited thereto.

The communicator 110 may perform communication with the external apparatus to receive broadcast content (or broadcast signal). The broadcast content may include at least one among a video, an audio or additional data (for example, electronic program guide (EPG)). The communicator 110 may include a tuner, a demodulator, an equalizer, and the like.

The processor 120 may control the overall operation of the electronic apparatus 100. To this end, the processor 120 may include one or more from a central processing unit (CPU), an application processor (AP), or a communication processor (CP).

The processor 120 may drive an operating system or an application program to control hardware elements or software elements connected to the processor 120, and may perform various data processing and calculations. Further, the processor 120 may load and process instructions or data received from at least one among other elements to a volatile memory, and store various data to a non-volatile memory.

The processor 120 may perform an initial setup of the electronic apparatus 100 based on a user instruction. The initial setup may be a task for setting a language, a date, a time, a user account, and the like to be applied to the electronic apparatus.

The processor 120 may, after the electronic apparatus 100 is manufactured, perform an initial setup based on a user instruction for turning on the electronic apparatus first being received. Further, the processor 120 may perform an initial setup based on receiving a user instruction for initializing the electronic apparatus 100 or receiving a user instruction for an initial setup of the electronic apparatus 100.

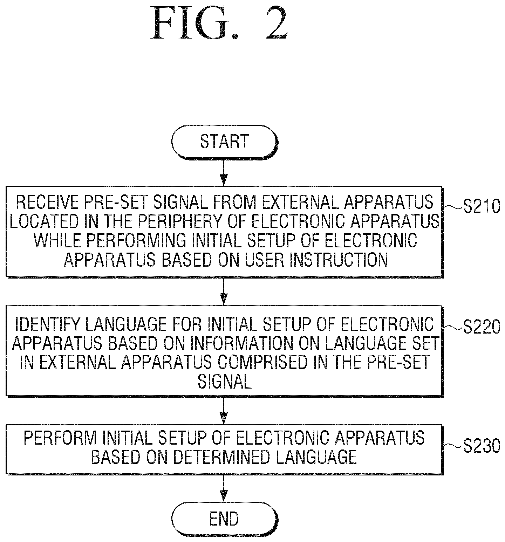

The processor 120 may then identify a language for an initial setup of the electronic apparatus 100. Referring to FIG. 2 below, a method for identifying a language for an initial setup by the electronic apparatus 100 may be described.

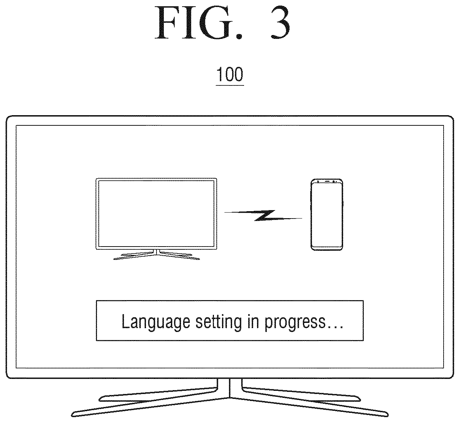

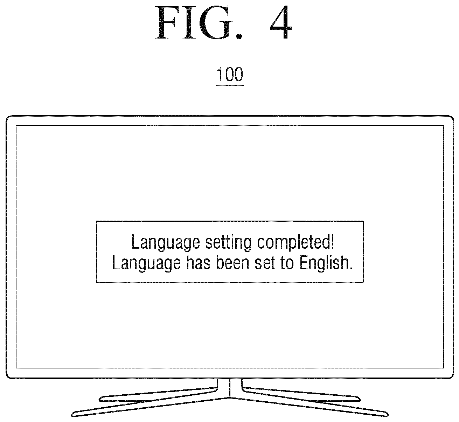

FIG. 2 is a flow chart describing a method of identifying a language for an initial setup by an electronic apparatus, according to embodiments. FIG. 3 is a diagram illustrating an electronic apparatus performing a language setting operation, according to embodiments. FIG. 4 is a diagram illustrating an electronic apparatus having completed a language setting operation, according to embodiments.

The processor 120 may identify a language for an initial setup of the electronic apparatus 100 based on information on a language set in the external apparatus located in the periphery of the electronic apparatus 100. The external apparatus may be an apparatus within a communicable range with the electronic apparatus 100, and may be a smartphone, but are not limited thereto. The external apparatus may be implemented as various electronic apparatuses such as a computer, a notebook, and an AI speaker.

To this end, the processor 120 may broadcast a signal requesting information on the language to the periphery of the electronic apparatus 100 while performing an initial setup of the electronic apparatus 100. The processor 120 may broadcast a signal requesting transmission of information on the language to the periphery of the electronic apparatus 100 according to a Bluetooth communication method. That is, the processor 120 may broadcast a signal requesting a transmission of information on the language using a Bluetooth communication circuitry included in the communicator 110 to the periphery of the electronic apparatus 100. The Bluetooth communication method is only an example, and the communication method of the disclosure is not limited thereto.

In this case, the external apparatus may broadcast a signal including information on the language set in the external apparatus as a response to the signal requesting transmission of information on the language. The external apparatus may, based on receiving a signal requesting transmission of information on the language, execute an application for communication with the electronic apparatus 100, and by executing an instruction corresponding to the relevant application, may broadcast a signal including information on the language set in the external apparatus.

The processor 120 may also, while broadcasting a signal requesting information on the language, broadcast information for an install of the above described application. The processor 120 may broadcast an instruction for URL information capable of receiving an install file of an application or an install of an application to the periphery of the electronic apparatus 100. The external apparatus may, based on receiving a signal requesting information on the above described language while in a state in which the application has not been installed, install the application using information on installing the application, and based on executing the installed application, broadcast a signal including information on the language set in the external apparatus.

In operation S210, the processor 120 may, while performing an initial setup of the electronic apparatus 100 based on a user instruction, receive a pre-set signal from the external apparatus located in the periphery of the electronic apparatus 100. The pre-set signal may be a signal broadcasted by the external apparatus as described above, and the external apparatus may, in response to the signal requesting transmission of information on the language, broadcast a signal including information on the language set in the external apparatus. The external apparatus may broadcast a signal including information on the language according to a Bluetooth communication method, but the communication method is not limited thereto.

In operation S220, the processor 120 may identify the language for an initial setup of the electronic apparatus 100 based on information on the language set in the external apparatus included in the pre-set signal. The processor 120 may, based on information on the language set in the external apparatus, identify the language set in the external apparatus, and identify the language set in the external apparatus as the language for initial setup of the electronic apparatus 100. For example, the processor 120 may, based on identifying the language set in the external apparatus as English based on the pre-set signal received from the external apparatus, identify the language for the initial setup of the electronic apparatus 100 as English.

Based on identifying the language for initial setup of the electronic apparatus 100 based on a signal received according to a Bluetooth communication method, the disclosure may identify the language set in the external apparatus positioned in near distance with the electronic apparatus 100 as the language for initial setup of the electronic apparatus 100. Accordingly, the language used by the actual user may be set as the language for an initial setup of the electronic apparatus 100.

That is, the disclosure may, by using a Bluetooth communication method supporting a relatively short-range communication rather than a Wi-Fi communication method, prevent the language set in the external apparatus of another user who is not the user of the electronic apparatus 100 from being set as the language of the electronic apparatus 100.

In operation S230, the processor 120 may then perform initial setup of the electronic apparatus 100 based on the identified language.

The processor 120 may, based on information on the language set in the external apparatus, display information that a language setting operation is in progress through a display, as illustrated in FIG. 3, while identifying the language for the initial setup of the electronic apparatus 100.

Further, as in the above-described embodiments, based on the language set in the external apparatus being identified as English, the processor 120 may identify English as the language for initial setup of the electronic apparatus 100, and as illustrated in FIG. 4, may indicate that the language of the electronic apparatus 100 has been set to English.

The disclosure may, based on information on the language set in the external apparatus, automatically identify the language for the initial setup of the electronic apparatus 100. Accordingly, the user may not have to separately input language setup, and thus user convenience may be improved.

In some cases, the electronic apparatus 100 may not receive a pre-set signal broadcasted by the external apparatus from the external apparatus for reasons such as the external apparatus not being present within the communicable range from the electronic apparatus 100.

Based on a pre-set signal broadcasted by the external apparatus not being received from the external apparatus, a method for identifying the language for the initial setup by the processor 120 is described below.

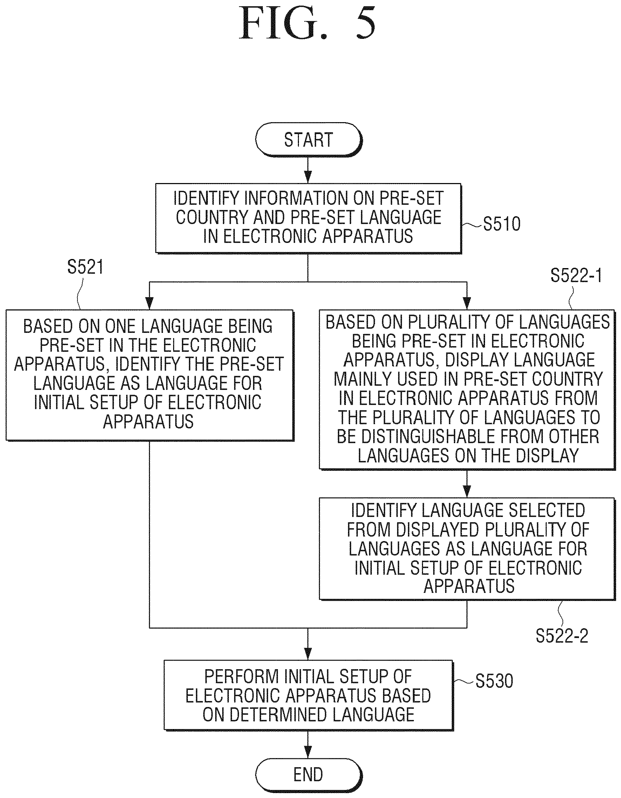

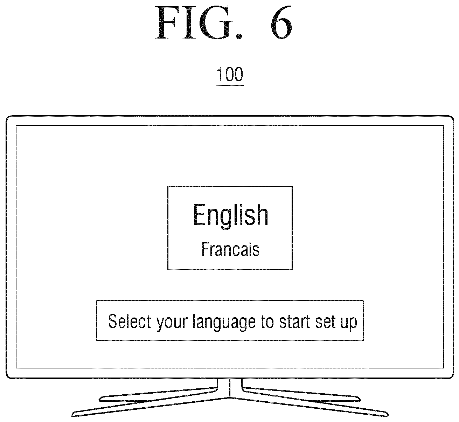

FIG. 5 is a flow chart describing a method of identifying a language for initial setup by an electronic apparatus, based on information on a pre-set country and a pre-set language in the electronic apparatus, according to embodiments. FIG. 6 is a diagram illustrating an electronic apparatus displaying a plurality of languages, according to embodiments.

The processor 120 may, based on not receiving a pre-set signal including information on the language set in the external apparatus from the external apparatus while performing an initial setup of the electronic apparatus 100, identify the language for the initial setup based on information on the pre-set country and the pre-set language in the electronic apparatus 100.

In operation S510, the processor 120 may, based on not receiving the pre-set signal from the external apparatus, identify information on the pre-set country and the pre-set language in the electronic apparatus 100. The information on the country and the information on the language may be set during the manufacturing of the electronic apparatus 100, but is not limited thereto.

In operation S521, the processor 120 may, based on one language being pre-set in the electronic apparatus 100, identify the pre-set language as the language for the initial setup of the electronic apparatus 100. For example, based on information on the United States and information on English being pre-set in the electronic apparatus 100, the processor may identify English as the language for the initial setup.

The processor 120 may, based on a plurality of languages being pre-set in the electronic apparatus 100, display the plurality of languages pre-set in the electronic apparatus 100 on the display to receive a user instruction to select one among the plurality of languages. That is, the processor 120 may display the plurality of languages pre-set in the electronic apparatus 100 among the plurality of languages supported by the electronic apparatus 100 on the display. In addition, the processor 120 may output an audio guiding to select one among the plurality of languages pre-set in the electronic apparatus 100 through the speaker.

In operation S522-1, the processor 120 may, based on a plurality of languages being pre-set in the electronic apparatus 100, display the language mainly used in the pre-set country in the electronic apparatus 100 from the plurality of languages to be distinguishable from other languages on the display.

For example, based on information on Canada and information English and French being pre-set in the electronic apparatus 100, the processor 120 may display information on English and French on the display, and based on English being pre-set as the mainly used language in the relevant country among specifically English and French, the processor 120 may display English to be distinguishable from French on the display.

In the method of displaying by distinguishing English from French, various technical ideas may be applied. For example, the processor 120 may display English to be distinguishable from French on the display through methods such as a text corresponding to English being highlighted and displayed or the text corresponding to English being displayed thicker than the text corresponding to French. In addition, the screen displayed herein may be a screen set so that English is selected by a press of a confirm button provided on the electronic apparatus 100 or a confirm button on a remote control.

For example, referring to FIG. 6, the processor 120 may display a text corresponding to English thicker than a text corresponding to French on the display. FIG. 6 illustrates displaying only the pre-set language in the electronic apparatus 100, but this is only an example, and the processor 120 may further display various languages supported by the electronic apparatus 100 in addition to the pre-set language in the electronic apparatus 100.

In operation S522-2, the processor 120 may then identify the language selected from the displayed plurality of languages on the display as the language for the initial setup of the electronic apparatus. The processor 120 may, based on a user instruction being input selecting one among the plurality of languages through a button provided on the electronic apparatus 100 or a button provided on a remote control, identify the language corresponding to user instruction as the language for initial setup of the electronic apparatus.

In operation S530, the processor 120 may then perform an initial setup of the electronic apparatus 100 based on the identified language.

The disclosure may, based on identifying the language for the initial setup based on information on the pre-set country and pre-set language in the electronic apparatus 100, identify the language for the initial setup automatically without user manipulation or with minimum user manipulation.

In the above description, identifying a language for an initial setup has been described based on information on a pre-set country and a pre-set language in an electronic apparatus 100 based on the premise that a pre-set signal including information on a language set in the external apparatus has not been received from the external apparatus, but this is only an example.

That is, the processor 120 may, based on information on the country and the language pre-set initially in the electronic apparatus 100 regardless of the external apparatus, identify the language for the initial setup. In addition, the processor 120 may, based on information on the language set in the external apparatus based on the premise of information on the country and the language not being pre-set in the electronic apparatus 100, identify the language for the initial setup.

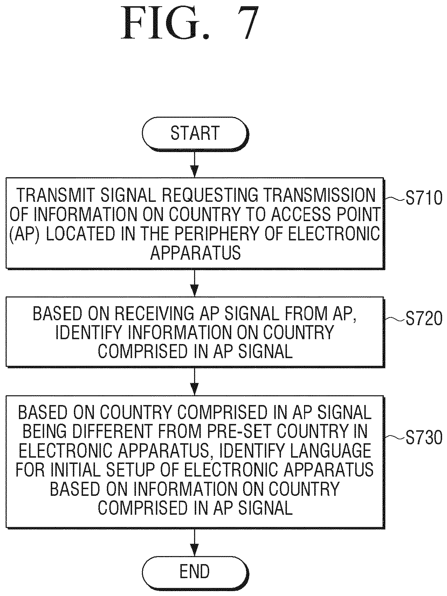

FIG. 7 is a flow chart describing a method of identifying a language for initial setup, based on an access point (AP) signal, according to embodiments.

In some cases, information on the pre-set country in the electronic apparatus 100 may not correspond to the country in which the electronic apparatus is actually present. For example, although information on Spain may be pre-set in an electronic apparatus 100, the actual electronic apparatus 100 may be sold and present in France.

In this case, the processor 120 may, based on information on the country included in the signal broadcasted by an access point (AP), identify the language for the initial setup of the electronic apparatus.

In operation S710, the processor 120 may transmit a signal requesting the transmission of information on the country to an access point (AP) located in the periphery of the electronic apparatus 100. The processor 120 may broadcast a signal requesting the transmission of information on the country according to a Wi-Fi communication method to the periphery of the electronic apparatus 100. The Wi-Fi communication method is only an example, and the communication method of the disclosure is not limited thereto.

In operation S720, the processor 120 may, based on receiving an AP signal from the AP, identify information on the country included in the AP signal. The AP signal may be a signal broadcasted by the AP, and the AP may broadcast the AP signal including information on the country in response to the signal requesting transmission of information on the above-described country. The external apparatus may broadcast a signal including information on the country according to the Wi-Fi communication method, but the communication method is not limited thereto.

In operation S730, the processor 120 may, based on the country comprised in the AP signal being different from the pre-set country in the electronic apparatus 100, identify the language for the initial setup of the electronic apparatus 100 based on information on the country comprised in the AP signal. For example, based on the country pre-set in the electronic apparatus 100 being Spain and the AP signal including information on France, the processor 120 may identify the language for the initial setup of the electronic apparatus 100 based on France. That is, the processor 120 may identify French as the language for the initial setup of the electronic apparatus 100.

Accordingly, based on identifying the language for the initial setup of the electronic apparatus 100 based on the AP signal, the disclosure may identify the language corresponding to the country in which the electronic apparatus is actually present as the language for the initial setup.

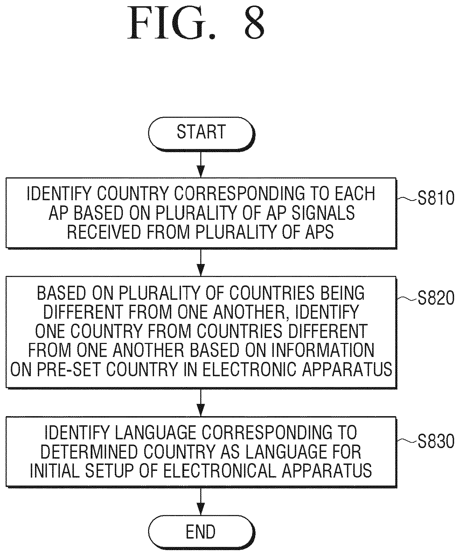

FIG. 8 is a flow chart describing a method of identifying a language for initial setup, based on receiving information on a plurality of countries from a plurality of Aps, according to embodiments.

The processor 120 may, based on a plurality of APs being positioned within a Wi-Fi communicable range, receive an AP signal from the plurality of APs.

In operation S810, the processor 120 may identify the country corresponding to each AP based on the plurality of AP signals received from the plurality of APs. The processor 120 may, based on information on the country included in each AP signal, identify the country corresponding to each AP.

In operation S820, the processor 120 may, based on a plurality of countries corresponding to each AP being different from one another, identify one country the countries different from one another based on information on the pre-set country in the electronic apparatus 100. In operation S830, the processor 120 may identify the language corresponding to the identified country as the language for the initial setup of the electronic apparatus 100.

For example, an AP signal being received from each of the first AP and the second AP may be assumed. In this case, the country corresponding to the first AP may be Spain, the country corresponding to the second AP may be France, and based on the country pre-set in the electronic apparatus 100 being Spain, the processor 120 may identify Spain among Spain and France, and identify Spanish as the language for the initial setup of the electronic apparatus 100.

In addition, the processor 120 may, based on the country pre-set in the electronic apparatus 100 and the distance of countries different from one another, identify one country among the countries different from one another. For example, based on the country corresponding to the first AP being France, the country corresponding to the second AP being China, and the pre-set country in the electronic apparatus 100 being Spain, the processor 120 may identify France located within a pre-set distance from Spain among France and China, and identify French as the language for the initial setup of the electronic apparatus 100.

The pre-set distance may be set during the product manufacturing, but is not limited thereto. Further, the pre-set distance is only an example, and the processor 120 may, based on information on the country set in a continental unit, identify one country among the countries different from one another. For example, the processor 120 may, among the countries different from one another, identify the country located in the same continent (for example, Europe) with the pre-set country in the electronic apparatus 100, and identify the language used in the relevant country as the language for the initial setup of the electronic apparatus 100.

Accordingly, the disclosure may filter out the AP signal including the wrong country information.

The processor 120 may, based on at least one being different among the countries corresponding to each AP, identify the language corresponding to the country having the highest frequency among the plurality of countries as the language for the initial setup of the electronic apparatus 100.

For example, the processor 120 may, based on the country corresponding to the first AP and the second AP being France, the country corresponding the a third AP being Germany, and the pre-set country in the electronic apparatus 100 being Spain, identify France with the highest frequency among France and Germany, and identify French as the language for the initial setup of the electronic apparatus 100.

Accordingly, the disclosure may, even in cases of the area the electronic apparatus 100 is located being adjacent to the countries different to one another, effectively identify the language for the initial setup of the electronic apparatus 100.

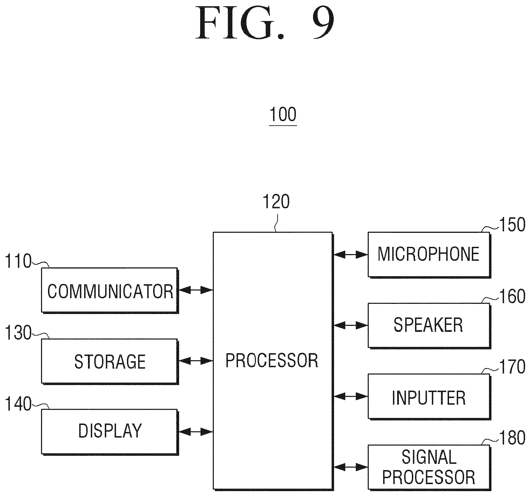

FIG. 9 is a detailed block diagram describing an electronic apparatus according to embodiments.

Referring to FIG. 9, the electronic apparatus 100 may include the communicator 110, a storage 130, a display 140, a microphone 150, a speaker 160, an inputter 170, a signal processor 180, and the processor 120. The overlapping parts in the description described above may be simplified or omitted.

The storage 130 may store an operating system (OS) for controlling the overall operation of elements of the electronic apparatus 100 and instructions or data related to the elements of the electronic apparatus 100.

The processor 120 may control a plurality of hardware elements or a plurality of software elements of the electronic apparatus 100 using various instructions or data stored in the storage 130, load and process instructions or data received from at least one among the various elements to a volatile memory, and store the various data in a non-volatile memory.

The storage 130 may store information on the plurality of languages. For example, the storage 130 may store information on languages such as English, Korean, and French, and the processor 120 may provide various functions using the languages set in the electronic apparatus 100 among the plurality of languages.

In addition, the storage 130 may store information on the country. Further, information on each country may be matched with information on the language. For example, the information on English may be matched to the United States, and information on Korean may be matched to Korea. Information on a plurality of languages may be matched to the information on the country. For example, information on English and French may be matched to Canada.

The display 140 may display various screens.

The display 140 may display various screens related to language setting such as information indicating the language setting is in progress, information indicating that language setting is completed, and a list including a plurality of languages.

In addition, the display 140 may, based on the language setting being completed, display a screen for the initial setup of the electronic apparatus 100 using the set language.

The display 140 as indicated above may be implemented as various forms of display such as a light emitting diode (LED), a liquid crystal display panel (LCD), organic light emitting diodes (OLED), a liquid crystal on silicon (LCoS), and a digital light processing (DLP). In addition, a driving circuitry, a backlight unit, or the like may be implemented in the form of an a-si TFT, a low temperature poly silicon (LTPS) TFT, an organic TFT (OTFT) may also be included in the display 140.

The microphone 150 may receive a user voice. The user voice herein may be a voice for the initial setup of the electronic apparatus 100. In addition, the user voice may be a voice to execute a specific function of the electronic apparatus 100. The processor 120 may, based on receiving the user voice through the microphone 150, analyze the user voice through a speech to text (STT) algorithm and perform a function corresponding to the user voice.

The speaker 160 may output various audio. For example, the speaker 160 may output various audio related to language setting such as audio indicating language setting in progress, audio indicating language setting being completed, or audio guiding to select one from the plurality of languages.

In addition, the speaker 160 may, based on the language setting of the electronic apparatus 100 being completed, use the set language to output audio guiding the initial setup of the electronic apparatus 100.

The inputter 170 may receive various user instructions. The processor 120 may execute functions corresponding to user instructions input through the inputter 170.

For example, the inputter 170 may receive input on user instruction selecting one from the plurality of languages, and the processor 120 may perform the initial setup of the electronic apparatus 100 with the language selected according to user input. In addition, the inputter 170 may receive input on user instruction to perform turn-on, change channel, adjust volume, or the like, and the processor 120 may perform the turning on, the changing channel, the adjusting volume, or the like of the electronic apparatus 100 according to the input user instruction.

The inputter 170 may be implemented as an input panel. The input panel may be implemented in a key pad method or a touch screen method provided with a touch pad or various function keys, number keys, special keys, character keys, and the like.

The signal processor 180 may perform signal processing on the received content through the communicator 110. The signal processor 180 may perform operations such as decoding, scaling and converting frame rate on images composing content, and may signal process images to an outputable form from the electronic apparatus 100. In addition, the signal processor 180 may perform signal processing such as decoding or the like on audio composing content, and may signal process audio to an outputable form from the speaker 160.

Accordingly, the display 140 may display images and the like output from the signal processor 180, and may output audio output from the signal processor 180.

The processor 120 may control the overall operation of the electronic apparatus 100.

The processor 120 may, based on one among information on the language set in the external apparatus, information on the pre-set country and the pre-set language in the electronic apparatus 100, and information on the country included in the AP signal, identify the language for the initial setup of the electronic apparatus 100.

That is, the processor 120 may identify the langue for the initial setup of the electronic apparatus through one from the various methods described above.

In addition, the processor 120 may, based on at least two among information on the language set in the external apparatus, information on the pre-set country and the pre-set language in the electronic apparatus 100, or the information on the country included in the AP signal, identify the language for the initial setup of the electronic apparatus 100.

That is, the processor 120 may identify the language for the initial setup of the electronic apparatus 100 through at least two of the various methods described above.

For example, the processor 120 may, based on receiving information on the language set in the external apparatus from the external apparatus, identify the language for the initial setup of the electronic apparatus 100 based on information on the language set in the external apparatus, and in case information on the language set in the external apparatus is not received from the external apparatus, the processor 120 may identify the language for the initial setup of the electronic apparatus 100 based on at least one among the information on the pre-set country and the pre-set language in the electronic apparatus 100 or information on the country included in the AP signal.

However, this is only an example, and the order of determination may be varied according to embodiments. For example, the processor 120 may first identify the language for the initial setup of the electronic apparatus 100 based on information on the country included in the AP signal, and if the AP signal is not received, may identify the language for the initial setup of the electronic apparatus 100 based on information on the pre-set country and the pre-set language in the electronic apparatus 100.

The processor 120 may, based on identifying the language based on the information on the language set in the external apparatus, identify the country corresponding to the relevant language. For example, if the language set in the external apparatus is Korean, the processor 120 may identify the country corresponding to the relevant language as Korea.

In addition, the processor 120 may identify the country based on information on the pre-set country in the electronic apparatus 100, or may identify the country based on information on the country included in the AP signal.

Further, the processor 120 may, based on identifying the country, perform the initial setup on at least one among the time and broadcast channel of the electronic apparatus 100 based on information on the relevant country. For example, the processor 120 may, based on Korea being identified as the country, may set the time of the electronic apparatus 100 based on the Korean standard time, and set the broadcasting standard of the electronic apparatus 100 based on the Korean broadcasting standard.

Accordingly, the disclosure may automatically perform the initial setup of various functions of the electronic apparatus 100 in addition to the language setting, and may improve user convenience accordingly.

According to the embodiments, user convenience may be improved by automatically performing language setting without user manipulation. In addition, user convenience may be improved by performing language setting with minimum user manipulation.

The methods according to the embodiments as described above may be implemented in the form of a software or in the form of an application installable in existing electronic apparatuses.

In addition, the methods according to the embodiments as described above may be implemented by software upgrade or hardware upgrade for existing electronic apparatuses.

The embodiments as described above may be performed through an embedded server provided in the electronic apparatus or an external server of the electronic apparatus.

A non-transitory computer readable medium stored with programs consecutively performing the control method of the electronic apparatus according to the disclosure may be provided.

The non-transitory computer readable medium refers to a medium that stores data semi-permanently rather than storing data for a very short time, such as a register, a cache, a memory or the like, and is readable by a device. The above mentioned various applications or programs may be stored and provided in the non-transitory computer readable medium such as a compact disc (CD), a digital versatile disc (DVD), a hard disc, a Blu-ray disc, a universal serial bus (USB), a memory card, and a read only memory (ROM).

While the disclosure has been illustrated and described with reference to the embodiments thereof, the disclosure is not limited to the embodiments described. It will be understood by those skilled in the art that various changes in form and details may be made therein without departing from the scope of the disclosure.

## Claims

1. An electronic apparatus (100) comprising:
a communicator (110); and
a processor (120) configured to:
while performing an initial setup of the electronic apparatus (100), transmit a request signal requesting transmission of information on an external apparatus language set in an external apparatus, using a Bluetooth module of the communicator (110), to the external apparatus,
based on receiving a pre-set signal, through the communicator (110), from the external apparatus that is located in a periphery of the electronic apparatus:
identify an initial setup language for the initial setup of the electronic apparatus (100), based on the information on the external apparatus language that is set in the external apparatus, the information on the external apparatus language being comprised in the received pre-set signal; and
perform the initial setup of the electronic apparatus (100), based on the identified initial setup language,
based on not receiving the pre-set signal from the external apparatus:
transmit a request signal requesting transmission of information on a country, using a Wi-Fi module of the communicator, to an access point, AP;
based on receiving an AP signal from the AP in response to the request signal being transmitted, identify the information on the country comprised in the received AP signal;
identify the initial setup language for the initial setup of the electronic apparatus, based on the identified information on the country comprised in the AP signal; and
perform the initial setup of the electronic apparatus, based on the identified initial setup language.

2. The electronic apparatus of claim 1, wherein the processor is further configured to, based on not receiving the pre-set signal while the initial setup is being performed, identify the initial setup language for the initial setup of the electronic apparatus, based on information on a pre-set country and a pre-set language that are pre-set in the electronic apparatus.

3. The electronic apparatus of claim 2, wherein the processor is further configured to, based on one language being pre-set in the electronic apparatus, identify the pre-set language as the initial setup language for the initial setup of the electronic apparatus.

4. The electronic apparatus of claim 2, further comprising a display;
wherein the processor is further configured to:
while the initial setup is being performed, based on a plurality of languages being pre-set in the electronic apparatus, control the display to display the plurality of languages by controlling the display to display a main language that is mainly used in the pre-set country, among the plurality of languages, to be distinguishable from other languages among the plurality of languages; and
identify a selected language that is selected from the displayed plurality of languages as the initial setup language for the initial setup of the electronic apparatus.

5. The electronic apparatus of claim 2, wherein the processor is further configured to:
based on the country comprised in the AP signal being different from the pre-set country pre-set in the electronic apparatus, identify the initial setup language for the initial setup of the electronic apparatus, based on the identified information on the country comprised in the AP signal.

6. The electronic apparatus of claim 5, wherein the processor is further configured to:
identify a plurality of countries respectively corresponding to a plurality of APs, based on a plurality of AP signals that is received from the plurality of APs;
based on the identified plurality of countries being different from one another, identify one among the identified plurality of countries, based on the information on the pre-set country pre-set in the electronic apparatus; and
identify one language corresponding to the identified one among the plurality of countries as the initial setup language for the initial setup of the electronic apparatus.

7. The electronic apparatus of claim 6, wherein the processor is further configured to identify the one among the identified plurality of countries, based on a distance between the pre-set country pre-set in the electronic apparatus and each of the identified plurality of countries.

8. The electronic apparatus of claim 5, wherein the processor is further configured to:
identify a plurality of countries respectively corresponding to a plurality of APs, based on a plurality of AP signals that is received from the plurality of APs; and
based on at least one among the identified plurality of countries being different, identify one language corresponding to one among the identified plurality of countries having a highest frequency among the identified plurality of countries, as the initial setup language for the initial setup of the electronic apparatus.

9. The electronic apparatus of claim 1, wherein the processor is further configured to:
identify a country corresponding to the identified initial setup language; and
perform the initial setup of at least one of a local time of the identified country and a broadcasting standard of the identified country within the electronic apparatus, based on information on the identified country.

10. A control method of an electronic apparatus (100), the control method comprising:
while performing an initial setup of the electronic apparatus, transmitting a request signal requesting transmission of information on an external apparatus language set in an external apparatus, using a Bluetooth module, to the external apparatus;
based on receiving a pre-set signal from the external apparatus that is located in a periphery of the electronic apparatus:
identifying an initial setup language for the initial setup of the electronic apparatus (100), based on the information on the external apparatus language that is set in the external apparatus, the information on the external apparatus language being comprised in the received pre-set signal; and
performing the initial setup of the electronic apparatus (100), based on the identified initial setup language,
based on not receiving the pre-set signal from the external apparatus:
transmitting a request signal requesting transmission of information on a country, using a Wi-Fi module, to an access point, AP;
based on receiving an AP signal from the AP in response to the request signal being transmitted, identifying the information on the country comprised in the received AP signal;
identifying the initial setup language for the initial setup of the electronic apparatus, based on the identified information on the country comprised in the AP signal; and
performing the initial setup of the electronic apparatus, based on the identified initial setup language.

11. The control method of claim 10, wherein the identifying the initial setup language comprises, based on not receiving the pre-set signal while the initial setup is being performed, identifying the initial setup language for the initial setup of the electronic apparatus, based on information on a pre-set country and a pre-set language that are pre-set in the electronic apparatus.

12. The control method of claim 11, wherein the identifying the initial setup language comprises, based on one language being pre-set in the electronic apparatus, identifying the pre-set language as the initial setup language for the initial setup of the electronic apparatus.

13. The control method of claim 11, further comprising, while the initial setup is being performed, based on a plurality of languages being pre-set in the electronic apparatus, displaying the plurality of languages by displaying a main language that is mainly used in the pre-set country, among the plurality of languages, to be distinguishable from other languages among the plurality of languages,
wherein the identifying the initial setup language comprises identifying a selected language that is selected from the displayed plurality of languages as the initial setup language for the initial setup of the electronic apparatus.

## Patentansprüche

1. Elektronische Vorrichtung (100), die Folgendes umfasst:
ein Kommunikationsgerät (110); und
einen Prozessor (120), der für Folgendes konfiguriert ist:
während des Durchführens einer Ersteinstellung der elektronischen Vorrichtung (100), Übertragen eines Anforderungssignals, das die Übertragung von Informationen über eine in einer externen Vorrichtung eingestellten externen Vorrichtungssprache anfordert, unter Verwendung eines Bluetooth-Moduls des Kommunikationsgeräts (110), an die externe Vorrichtung,
basierend auf dem Empfangen eines voreingestellten Signals, durch das Kommunikationsgerät (110), von der externen Vorrichtung, die sich in einer Peripherie der elektronischen Vorrichtung befindet:
Identifizieren einer Ersteinstellungssprache für die Ersteinstellung der elektronischen Vorrichtung (100), basierend auf den Informationen über die externe Vorrichtungssprache, die in der externen Vorrichtung eingestellt ist, wobei die Informationen über die externe Vorrichtungssprache in dem empfangenen voreingestellten Signal umfasst sind; und
Durchführen der Ersteinstellung der elektronischen Vorrichtung (100), basierend auf der identifizierten Ersteinstellungssprache,
basierend auf dem Nicht-Empfangen des voreingestellten Signals von der externen Vorrichtung:
Übertragen eines Anforderungssignals, das die Übertragung von Informationen über ein Land anfordert, unter Verwendung eines Wi-Fi-Moduls des Kommunikationsgeräts, an einen Zugangspunkt (Access Point), AP;
basierend auf dem Empfangen eines AP-Signals von dem AP als Reaktion auf das Anforderungssignal, das übertragen wird, Identifizieren der Informationen über das Land, die in dem empfangenen AP-Signal umfasst sind;
Identifizieren der Ersteinstellungssprache für die Ersteinstellung der elektronischen Vorrichtung, basierend auf den identifizierten Informationen über das Land, die in dem AP-Signal umfasst sind; und
Durchführen der Ersteinstellung der elektronischen Vorrichtung, basierend auf der identifizierten Ersteinstellungssprache.

2. Elektronische Vorrichtung nach Anspruch 1, wobei der Prozessor ferner konfiguriert ist, basierend auf dem Nicht-Empfangen des voreingestellten Signals, während die Ersteinstellung durchgeführt wird, die Ersteinstellungssprache für die Ersteinstellung der elektronischen Vorrichtung zu identifizieren, basierend auf Informationen über ein voreingestelltes Land und eine voreingestellte Sprache, die in der elektronischen Vorrichtung voreingestellt sind.

3. Elektronische Vorrichtung nach Anspruch 2, wobei der Prozessor ferner konfiguriert ist, basierend darauf, dass eine Sprache in der elektronischen Vorrichtung voreingestellt ist, die voreingestellte Sprache als Ersteinstellungssprache für die Ersteinstellung der elektronischen Vorrichtung zu identifizieren.

4. Elektronische Vorrichtung nach Anspruch 2, die ferner eine Anzeige umfasst;
wobei der Prozessor ferner für Folgendes konfiguriert ist:
während die Ersteinstellung durchgeführt wird, basierend darauf, dass eine Vielzahl von Sprachen in der elektronischen Vorrichtung voreingestellt sind, Steuern der Anzeige, um die Vielzahl von Sprachen anzuzeigen, indem die Anzeige gesteuert wird, um eine Hauptsprache, die hauptsächlich in dem voreingestellten Land verwendet wird, unter der Vielzahl von Sprachen, anzuzeigen, um von anderen Sprachen unter der Vielzahl von Sprachen unterscheidbar zu sein; und
Identifizieren einer ausgewählten Sprache, die aus der angezeigten Vielzahl von Sprachen ausgewählt ist, als Ersteinstellungssprache für die Ersteinstellung der elektronischen Vorrichtung.

5. Elektronische Vorrichtung nach Anspruch 2, wobei der Prozessor ferner für Folgendes konfiguriert ist:
basierend darauf, dass sich das Land, das in dem AP-Signal umfasst ist, von dem voreingestellten Land, das in der elektronischen Vorrichtung voreingestellt ist, unterscheidet, Identifizieren der Ersteinstellungssprache für die Ersteinstellung der elektronischen Vorrichtung, basierend auf den identifizierten Informationen über das Land, die in dem AP-Signal umfasst sind.

6. Elektronische Vorrichtung nach Anspruch 5, wobei der Prozessor ferner für Folgendes konfiguriert ist:
Identifizieren einer Vielzahl von Ländern, die jeweils einer Vielzahl von APs entsprechen, basierend auf einer Vielzahl von AP-Signalen, die von der Vielzahl von APs empfangen werden;
basierend darauf, dass sich die identifizierte Vielzahl von Ländern voneinander unterscheiden, Identifizieren eines unter der identifizierten Vielzahl von Ländern, basierend auf den Informationen über das voreingestellte Land, das in der elektronischen Vorrichtung voreingestellt ist; und
Identifizieren einer Sprache, die dem identifizierten einen unter der Vielzahl von Ländern entspricht, als Ersteinstellungssprache für die Ersteinstellung der elektronischen Vorrichtung.

7. Elektronische Vorrichtung nach Anspruch 6, wobei der Prozessor ferner konfiguriert ist, das eine unter der identifizierten Vielzahl von Ländern zu identifizieren, basierend auf einer Entfernung zwischen dem voreingestellten Land, das in der elektronischen Vorrichtung voreingestellt ist, und jedem der identifizierten Vielzahl von Ländern.

8. Elektronische Vorrichtung nach Anspruch 5, wobei der Prozessor ferner für Folgendes konfiguriert ist:
Identifizieren einer Vielzahl von Ländern, die jeweils einer Vielzahl von APs entsprechen, basierend auf einer Vielzahl von AP-Signalen, die von der Vielzahl von APs empfangen werden; und
basierend darauf, dass sich mindestens eines unter der identifizierten Vielzahl von Ländern unterscheidet, Identifizieren einer Sprache, die einem unter der identifizierten Vielzahl von Ländern entspricht, das eine höchste Frequenz unter der identifizierten Vielzahl von Ländern aufweist, als Ersteinstellungssprache für die Ersteinstellung der elektronischen Vorrichtung.

9. Elektronische Vorrichtung nach Anspruch 1, wobei der Prozessor ferner für Folgendes konfiguriert ist:
Identifizieren eines Landes, das der identifizierten Ersteinstellungssprache entspricht; und
Durchführen der Ersteinstellung von mindestens einem von einer Ortszeit des identifizierten Landes und einem Rundfunkstandard des identifizierten Landes innerhalb der elektronischen Vorrichtung, basierend auf Informationen über das identifizierte Land.

10. Steuerungsverfahren einer elektronischen Vorrichtung (100), wobei das Steuerungsverfahren Folgendes umfasst:
während des Durchführens einer Ersteinstellung der elektronischen Vorrichtung, Übertragen eines Anforderungssignals, das die Übertragung von Informationen über eine in einer externen Vorrichtung eingestellten externen Vorrichtungssprache anfordert, unter Verwendung eines Bluetooth-Moduls, an die externe Vorrichtung,
basierend auf dem Empfangen eines voreingestellten Signals von der externen Vorrichtung, die sich in einer Peripherie der elektronischen Vorrichtung befindet:
Identifizieren einer Ersteinstellungssprache für die Ersteinstellung der elektronischen Vorrichtung (100), basierend auf den Informationen über die externe Vorrichtungssprache, die in der externen Vorrichtung eingestellt ist, wobei die Informationen über die externe Vorrichtungssprache in dem empfangenen voreingestellten Signal umfasst sind; und
Durchführen der Ersteinstellung der elektronischen Vorrichtung (100), basierend auf der identifizierten Ersteinstellungssprache,
basierend auf dem Nicht-Empfangen des voreingestellten Signals von der externen Vorrichtung:
Übertragen eines Anforderungssignals, das die Übertragung von Informationen über ein Land anfordert, unter Verwendung eines Wi-Fi-Moduls, an einen Zugangspunkt, AP;
basierend auf dem Empfangen eines AP-Signals von dem AP als Reaktion auf das Anforderungssignal, das übertragen wird, Identifizieren der Informationen über das Land, die in dem empfangenen AP-Signal umfasst sind;
Identifizieren der Ersteinstellungssprache für die Ersteinstellung der elektronischen Vorrichtung, basierend auf den identifizierten Informationen über das Land, die in dem AP-Signal umfasst sind; und
Durchführen der Ersteinstellung der elektronischen Vorrichtung, basierend auf der identifizierten Ersteinstellungssprache.

11. Steuerungsverfahren nach Anspruch 10, wobei das Identifizieren der Ersteinstellungssprache, basierend auf dem Nicht-Empfangen des voreingestellten Signals, während die Ersteinstellung durchgeführt wird, das Identifizieren der Ersteinstellungssprache für die Ersteinstellung der elektronischen Vorrichtung umfasst, basierend auf Informationen über ein voreingestelltes Land und eine voreingestellte Sprache, die in der elektronischen Vorrichtung voreingestellt sind.

12. Steuerungsverfahren nach Anspruch 11, wobei das Identifizieren der Ersteinstellungssprache, basierend darauf, dass eine Sprache in der elektronischen Vorrichtung voreingestellt ist, das Identifizieren der voreingestellten Sprache als Ersteinstellungssprache für die Ersteinstellung der elektronischen Vorrichtung umfasst.

13. Steuerungsverfahren nach Anspruch 11, das ferner, während die Ersteinstellung durchgeführt wird, basierend darauf, dass eine Vielzahl von Sprachen in der elektronischen Vorrichtung voreingestellt sind, das Anzeigen der Vielzahl von Sprachen umfasst, indem eine Hauptsprache, die hauptsächlich in dem voreingestellten Land verwendet wird, unter der Vielzahl von Sprachen, angezeigt wird, um von anderen Sprachen unter der Vielzahl von Sprachen unterscheidbar zu sein,
wobei das Identifizieren der Ersteinstellungssprache das Identifizieren einer ausgewählten Sprache, die aus der angezeigten Vielzahl von Sprachen ausgewählt ist, als Ersteinstellungssprache für die Ersteinstellung der elektronischen Vorrichtung umfasst.

## Revendications

1. Appareil électronique (100) comprenant :
un dispositif de communication (110) ; et
un processeur (120) configuré pour :
pendant la réalisation d'une configuration initiale de l'appareil électronique (100), émettre un signal de requête demandant la transmission d'informations sur une langue d'appareil externe configurée dans un appareil externe, à l'aide d'un module Bluetooth du dispositif de communication (110), à l'appareil externe,
à la réception d'un signal prédéfini, par le biais du dispositif de communication (110), à partir de l'appareil externe qui est situé dans une périphérie de l'appareil électronique :
identifier une langue de configuration initiale pour la configuration initiale de l'appareil électronique (100), en fonction des informations sur la langue d'appareil externe qui est configurée dans l'appareil externe, les informations sur la langue d'appareil externe étant comprises dans le signal prédéfini reçu ; et
réaliser la configuration initiale de l'appareil électronique (100), en fonction de la langue de configuration initiale identifiée,
à la non-réception du signal prédéfini à partir de l'appareil externe :
émettre un signal de requête demandant la transmission d'informations sur un pays, à l'aide d'un module Wi-Fi du dispositif de communication, à un point d'accès, AP ;
à la réception d'un signal d'AP à partir de l'AP en réponse au signal de requête émis, identifier les informations sur le pays comprises dans le signal d'AP reçu ;
identifier la langue de configuration initiale pour la configuration initiale de l'appareil électronique, en fonction des informations identifiées sur le pays comprises dans le signal d'AP ; et
réaliser la configuration initiale de l'appareil électronique, en fonction de la langue de configuration initiale identifiée.

2. Appareil électronique selon la revendication 1, dans lequel le processeur est configuré en outre pour, à la non-réception du signal prédéfini pendant la réalisation de la configuration initiale, identifier la langue de configuration initiale pour la configuration initiale de l'appareil électronique, en fonction d'informations sur un pays prédéfini et une langue prédéfinie qui sont prédéfinis dans l'appareil électronique.

3. Appareil électronique selon la revendication 2, dans lequel le processeur est configuré en outre pour, en fonction d'une langue prédéfinie dans l'appareil électronique, identifier la langue prédéfinie comme langue de configuration initiale pour la configuration initiale de l'appareil électronique.

4. Appareil électronique selon la revendication 2, comprenant en outre un afficheur ;
dans lequel le processeur est configuré en outre pour :
pendant la réalisation de la configuration initiale, en fonction d'une pluralité de langues prédéfinies dans l'appareil électronique, commander l'afficheur pour afficher la pluralité de langues en commandant l'afficheur pour afficher une langue principale qui est principalement utilisée dans le pays prédéfini, parmi la pluralité de langues, afin de la différencier d'autres langues parmi la pluralité de langues ; et
identifier une langue sélectionnée qui est sélectionnée parmi la pluralité affichée de langues comme langue de configuration initiale pour la configuration initiale de l'appareil électronique.

5. Appareil électronique selon la revendication 2, dans lequel le processeur est configuré en outre pour :
quand le pays compris dans le signal d'AP est différent du pays prédéfini qui est prédéfini dans l'appareil électronique, identifier la langue de configuration initiale pour la configuration initiale de l'appareil électronique, en fonction des informations identifiées sur le pays comprises dans le signal d'AP.

6. Appareil électronique selon la revendication 5, dans lequel le processeur est configuré en outre pour :
identifier une pluralité de pays correspondant respectivement à une pluralité d'AP, en fonction d'une pluralité de signaux d'AP qui est reçue à partir de la pluralité d'AP ;
quand les pays de la pluralité identifiée de pays sont différents les uns des autres, identifier un pays parmi la pluralité identifiée de pays, en fonction des informations sur le pays prédéfini qui est prédéfini dans l'appareil électronique ; et
identifier une langue correspondant au pays identifié parmi la pluralité de pays comme langue de configuration initiale pour la configuration initiale de l'appareil électronique.

7. Appareil électronique selon la revendication 6, dans lequel le processeur est configuré en outre pour identifier le pays parmi la pluralité identifiée de pays, en fonction d'une distance entre le pays prédéfini qui est prédéfini dans l'appareil électronique et chaque pays de la pluralité identifiée de pays.

8. Appareil électronique selon la revendication 5, dans lequel le processeur est configuré en outre pour :
identifier une pluralité de pays correspondant respectivement à une pluralité d'AP, en fonction d'une pluralité de signaux d'AP qui est reçue à partir de la pluralité d'AP ; et
quand au moins un pays parmi la pluralité identifiée de pays est différent, identifier une langue correspondant à un pays parmi la pluralité identifiée de pays qui est la plus fréquente parmi la pluralité identifiée de pays, comme langue de configuration initiale pour la configuration initiale de l'appareil électronique.

9. Appareil électronique selon la revendication 1, dans lequel le processeur est configuré en outre pour :
identifier un pays correspondant à la langue de configuration initiale identifiée ; et
réaliser la configuration initiale d'une heure locale du pays identifié et/ou d'une norme de diffusion du pays identifié au sein de l'appareil électronique, en fonction d'informations sur le pays identifié.

10. Procédé de commande d'un appareil électronique (100), le procédé de commande comprenant :
pendant la réalisation d'une configuration initiale de l'appareil électronique, l'émission d'un signal de requête demandant la transmission d'informations sur une langue d'appareil externe configurée dans un appareil externe, à l'aide d'un module Bluetooth, à l'appareil externe ;
à la réception d'un signal prédéfini à partir de l'appareil externe qui est situé dans une périphérie de l'appareil électronique :
l'identification d'une langue de configuration initiale pour la configuration initiale de l'appareil électronique (100), en fonction des informations sur la langue d'appareil externe qui est configurée dans l'appareil externe, les informations sur la langue d'appareil externe étant comprises dans le signal prédéfini reçu ; et
la réalisation de la configuration initiale de l'appareil électronique (100), en fonction de la langue de configuration initiale identifiée,
à la non-réception du signal prédéfini à partir de l'appareil externe :
l'émission d'un signal de requête demandant la transmission d'informations sur un pays, à l'aide d'un module Wi-Fi, à un point d'accès , AP ;
à la réception d'un signal AP à partir de l'AP en réponse au signal de requête émis, l'identification des informations sur le pays comprises dans le signal d'AP reçu ;
l'identification de la langue de configuration initiale pour la configuration initiale de l'appareil électronique, en fonction des informations identifiées sur le pays comprises dans le signal d'AP ; et
la réalisation de la configuration initiale de l'appareil électronique, en fonction de la langue de configuration initiale identifiée.

11. Procédé de commande selon la revendication 10, dans lequel l'identification de la langue de configuration initiale comprend, à la non-réception du signal prédéfini pendant la réalisation de la configuration initiale, l'identification de la langue de configuration initiale pour la configuration initiale de l'appareil électronique, en fonction d'informations sur un pays prédéfini et une langue prédéfinie qui sont prédéfinis dans l'appareil électronique.

12. Procédé de commande selon la revendication 11, dans lequel l'identification de la langue de configuration initiale comprend, en fonction d'une langue prédéfinie dans l'appareil électronique, l'identification de la langue prédéfinie comme langue de configuration initiale pour la configuration initiale de l'appareil électronique.

13. Procédé de commande selon la revendication 11, comprenant en outre, pendant la réalisation de la configuration initiale, en fonction d'une pluralité de langues prédéfinies dans l'appareil électronique, l'affichage de la pluralité de langues en affichant une langue principale qui est principalement utilisée dans le pays prédéfini, parmi la pluralité de langues, pour la différencier d'autres langues parmi la pluralité de langues,
dans lequel l'identification de la langue de configuration initiale comprend l'identification d'une langue sélectionnée qui est sélectionnée parmi la pluralité affichée de langues comme langue de configuration initiale pour la configuration initiale de l'appareil électronique.
